# EUROPÄISCHE PATENTANMELDUNG

(11) **EP 1 400 294 A1**
(43) Veröffentlichungstag der Anmeldung: **24.03.2004**
(21) Anmeldenummer: 02021309.6
(22) Anmeldetag: 20.09.2002
(51) Int. Cl.: B23B 31/117

(54) **Schnellwechselsystem für Bürstmaschinen**

(71) Anmelder: Niederberger Schleif- und Polierautomaten AG, 6010 Kriens (CH)
(72) Erfinder: Niederberger, Ernst, 6370 Oberdorf (CH)
(74) Vertreter: Blum, Rudolf Emil Ernst

(57) **Zusammenfassung**

Beim Wechselsystem für Tellerbürsten ist die Tellerbürste (1) auf einem Schaft (3) gehalten. Ein zwischen einer Anschrägung (6) und einem vorstehenden Teil (7) eines Zapfens (5) eingeklemmter und dadurch deformierter Gummiring (4) hindert die Tellerbürste (1) daran sich vom Schaft (3) zu lösen. Ein Mitnehmer (17) dient zur Übertragung des Drehmoments. Zum Lösen der Tellerbürste (1) wird mittels eines Gabelwerkzeuges auf Kontaktflächen (13) eine Kraft ausgeübt. Diese führt zu einem Verschieben der Manschette (8). Ein Querelement (12) dient dazu, einen Zapfen (5) solidarisch mit der Manschette (8), entgegen der Kraft einer Druckfeder (9) zu verschieben. Durch das Verschieben des Zapfens (5) wird der Spalt zwischen dessen vorstehenden Teil (7) und der Anschrägung (6) vergrössert. Die Deformation des Gummirings (4) wird dadurch aufgehoben und die Tellerbürste (1) kann vom Schaft (3) abgezogen werden. Das Wechselsystem ist schneller als konventionelle Systeme und eignet sich in einer Ausführung als Adapter (16) auch zum Nachrüsten.

## Beschreibung

Die vorliegende Erfindung bezieht sich auf einen Werkzeughalter und einen Werkzeughalteradapter gemäss dem Oberbegriff der unabhängigen Ansprüche.

Werkzeughalter dieser Art werden unter anderem in Bürstmaschinen, wie sie in EP 0 342 315 B1 beschrieben sind, verwendet. Die bekannten Werkzeughalter weisen eine mittige Befestigungsschraube auf, welche zum Wechseln der Werkzeuge jeweils entfernt werden muss. Diese Art der Befestigung ist unvollkommen, weil das Einsetzen und Anziehen bzw. Lösen und Entfernen der Befestigungsschraube schwierig und zeitaufwendig ist. Diese Arbeit wird zudem durch Abrieb bzw. Schmutz im Bereich der Bürsten erschwert. Dies ist insbesondere störend, wenn die Bürstmaschine Teil einer Fertigungsstrasse ist, und die Betriebsunterbrüche jeweils die gesamte Fertigungsstrasse betreffen. Als Alternative zur Befestigung mittels Schraube sind auch Bajonett-Befestigungen bekannt. Bajonett-Befestigungen haben den Nachteil, dass sie vibrationsempfindlich sind und nur für Drehungen in einer Richtung geeignet sind. Zudem müssen die Werkzeuge mit komplexen Befestigungsprofilen versehen werden, was deren Herstellung verteuert.

Werkzeughalteradapter der oben genannten Art werden verwendet, um Maschinen mit einer anderen Werkzeughalterart zu versehen, als ursprünglich vorgesehen ist. Bekannte Werkzeughalteradapter sind jedoch meist auf rein geometrische Merkmale beschränkt, wie z.B. das Bereitstellen eines bestimmten, vom primären Halter abweichenden Durchmessers des Werkzeughalterschaftes. Eine Beschleunigung des Werkzeugwechsels wird mit diesen bekannten Werkzeughalteradaptern meistens nicht ermöglicht. Zudem sind keine Werkzeughalteradapter bekannt, die speziell für die Eigenschaften von Tellerbürsten optimiert wurden.

Es stellt sich daher die Aufgabe, einen verbesserten Werkzeughalter der eingangs genannten Art bereitzustellen, der die oben genannten Nachteile zumindest teilweise vermeidet.

Diese Aufgabe wird von Anspruch 1 gelöst, indem der Werkzeughalter mindestens ein elastisches Element aufweist und mindestens ein Mittel zur Deformation desselben, wobei das elastische Element in einem deformierten Zustand das Werkzeug am Ablösen vom Werkzeughalter hindert. Der erfindungsgemässe Werkzeughalter hat den Vorteil, dass die Werkzeuge sehr einfach und schnell gewechselt werden können.

Eine weitere Aufgabe besteht darin, einen verbesserten Werkzeughalteradapter der eingangs genannten Art bereitzustellen, der die oben genannten Nachteile zumindest teilweise vermeidet.

Diese Aufgabe wird von Anspruch 20 gelöst, indem der Werkzeughalteradapter ein im Inneren des Werkzeughalteradapters geführtes Zentralelement aufweist, welches von ausserhalb des Werkzeughalteradapters verschiebbar ist. Der erfindungsgemässe Werkzeughalteradapter hat den Vorteil, dass er sich gut zum Nachrüsten bestehender Anlagen eignet und nur geringe Anforderungen an diese stellt.

Weitere Vorteile und bevorzugte Ausführungsbeispiele ergeben sich aus den abhängigen Ansprüchen, sowie aus der nun folgenden Beschreibung anhand der Figuren. Dabei zeigen:
Fig. 1 den erfindungsgemässen Werkzeughalter ohne Werkzeug, in einem Querschnitt,
Fig. 2 der Werkzeughalter aus Fig.1, mit einem daran befestigten Werkzeug, in einem Querschnitt,
Fig. 3 eine Teilansicht des erfindungsgemässen Werkzeughalteradapters, in einem Querschnitt,
Fig. 4 eine Ausführung des erfindungsgemässen Werkzeughalters mit einer Druckfeder und einem Stössel
Fig. 5 eine Ausführung des erfindungsgemässen Werkzeughalters mit einer Druckfeder und einem Querelement,
Fig. 6 eine Teilansicht einer Bürstmaschine mit dem erfindungsgemässen Werkzeughalter
Fig. 7 die Planeteneinheit einer Bürstmaschine mit einem Pneumatikzylinder zur Bedienung der Werkzeughalter,
Fig. 8 den Werkzeughalter einer Bürstmaschine mit einem darauf aufgesetzten erfindungsgemässen Werkzeughalteradapter und einem Werkzeug.

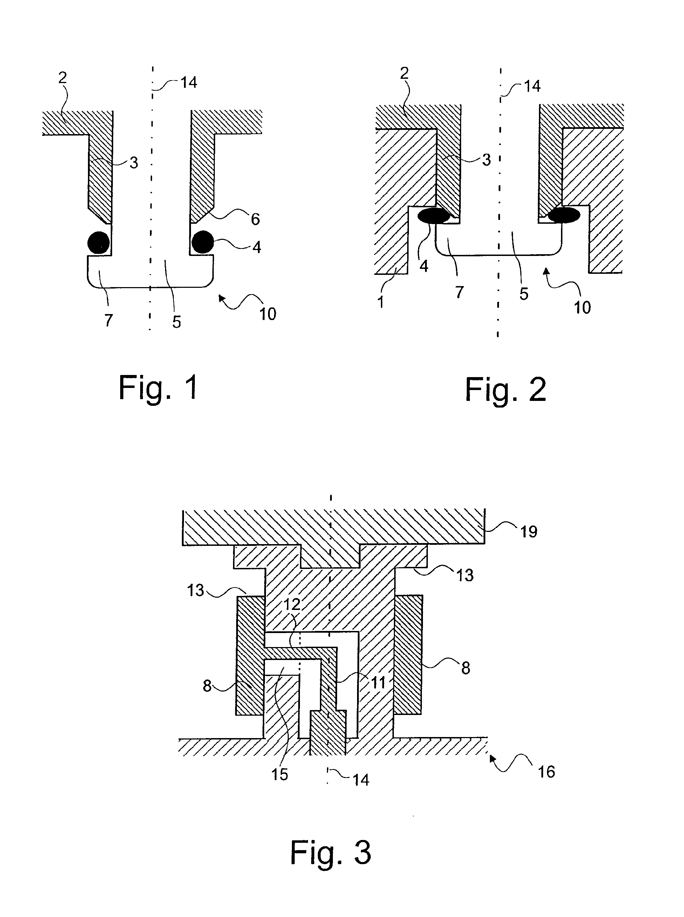

Fig. 1 und Fig. 2 zeigen das Prinzip des erfindungsgemässen Werkzeughalters anhand einer bevorzugten Ausführungsform. Fig. 1 zeigt den Werkzeughalter 10 ohne Werkzeug, in einem Querschnitt. Fig. 2 zeigt denselben Werkzeughalter 10 mit Werkzeug 1, ebenfalls in einem Querschnitt. Der Werkzeughalter 10 weist eine Halterplatte 2 und einen Schaft 3 auf. Im Schaft 3 ist vorzugsweise ein Zapfen 5 geführt. Der Zapfen 5 ist bevorzugt rotationssymmetrisch und hat vorzugsweise, zumindest was sein Mittelteil betrifft, die Form eines Zylinders. Der Zapfen 5 kann jedoch auch eckige Formen, oder z.B. die Form eines Zylinders mit einer seitlichen Führungsnut haben. An seinem werkstückseitigen bzw. unteren Ende hat der Zapfen 5 einen vorstehenden Teil 7. Der Schaft 3 hat an seinem werkstückseitigen bzw. unteren Ende vorzugsweise eine Anschrägung, welche eine Gegendruckfläche 6 bildet. Zwischen dem vorstehendem Teil 7 und der Gegendruckfläche 6 liegt ein elastisches Element, bevorzugt ein O-Ring aus Gummi. O-Ringe haben im nicht-deformierten Zustand, wie in Fig. 1 gezeigt, ein kreisförmiges Profil, d.h. einen kreisförmigen Strangquerschnitt. Das Profil im deformierten Zustand ist in Fig. 2 idealisiert als elliptisches Profil gezeigt. Befindet sich der Zapfen 5, wie in Fig. 1 gezeigt, in einer ersten bzw. unteren Position, so kann ein Werkzeug 1 von Hand auf den Halter 10 gesetzt oder vom Halter 10 entnommen werden. Wurde ein Werkzeug 1 aufgesetzt, so kann dieses fixiert werden, indem der Zapfen 5 in eine zweite bzw. obere Position bewegt wird. Der O-Ring 4 wird dabei zwischen der Gegendruckfläche 6 und dem vorstehenden Teil 7 eingeklemmt und dadurch deformiert. Durch die Deformation steht der O-Ring 4 über den Radius des Schaftes 3 hervor und fixiert dadurch das Werkzeug 1 auf Halterplatte 2 und Schaft 3. Die die Gegendruckfläche 6 bildende Anschrägung des Schaftes 3 ist bevorzugt so ausgestaltet, dass das Ende des Schaftes 3 Stumpf ist, d.h. dass die Anschrägung nicht bis zum Zapfen 5 reicht, sondern bevorzugt um eine Strecke ca. der Länge des O-Ring-Strangradius vor dem Zapfen 5 endet. Dies hat den Vorteil, dass der Spalt in dem der O-Ring 4 liegt weiter verkleinert bzw. der O-Ring weiter nach aussen gedrückt werden kann, als dies bei einer bis zum Zapfen 4 reichenden Schrägfläche der Fall wäre. Die Verwendung eines O-Rings 4 für den erfindungsgemässen Werkzeughalter 10 hat den Vorteil, dass der O-Ring 4 bei einem Defekt sehr leicht ersetzt werden kann. Zudem sind die Kosten von Ersatzringen vernachlässigbar klein. Anstelle des bevorzugten O-Rings 4 können auch andere elastische Elemente verwendet werden. Z.B. Gummiringe mit eckigem Strangprofil, oder elastische Segmente, d.h. z.B. ein oder mehrere Gummiteile, die rings um den Schaft herum angeordnet sind.

Der Schaft 3 des Werkzeughalters und das mindestens eine elastische Element, d.h. insbesondere der O-Ring, sind bevorzugt so dimensioniert, angeordnet und ausgestaltet, dass das Werkzeug 1 beim Aufheben der Deformation gerade noch so fest gehalten wird, dass es nicht abfällt und bequem von Hand abgenommen werden kann, bzw. ein Ersatzwerkzeug aufgesetzt werden kann und dieses zumindest vorübergehend ohne eine Deformation des elastischen Elements 4 auf dem Schaft 3 hält.

Das in Fig. 2 als Beispiel gezeigte Werkzeug 1 weist eine zylindrische Aussparung bzw. Bohrung auf. Die Bohrung hat unten, d.h. werkstückseitig, einen ersten grösseren Durchmesser und oben, d.h. werkzeughalterseitig einen zweiten, kleineren Durchmesser. Das Werkzeug 1 weist dadurch in der Aussparung bei einer bestimmten Tiefe eine Kante auf. Der deformierte O-Ring 4 liegt auf dieser Kante auf und verhindert so, dass das Werkzeug 1 vom Schaft 3 rutscht.

Bei der in Fig. 1 und 2 gezeigten Ausführungsform umfasst das Mittel zur Deformation des elastischen Elements 4 den Schaft 3 mit Gegendruckfläche 6 und den Zapfen 5 mit vorstehendem Teil 7. Dies ist eine bevorzugte Ausgestaltung. Das Mittel zur Deformation des elastischen Elements kann auch in anderer Weise ausgestaltet werden, z.B. in einer Variante, bei der die Kraft zur Deformation des elastischen Elements nicht über einen verschiebbaren Zapfen, sondern über eine rotierbare Gewindewelle übertragen wird.

Fig. 3 zeigt eine Teilansicht einer bevorzugten Ausführungsform des erfindungsgemässen Werkzeughalteradapters 16. Der Werkzeughalteradapter 16 wird an einem ersten Werkzeughalter 19 anstelle eines Werkzeuges 1 befestigt. Der Werkzeughalteradapter 16 weist seinerseits einen zweiten Werkzeughalter (nur teilweise gezeigt) auf, und zwar einen zweiten Werkzeughalter, welcher insbesondere zum Lösen oder Befestigen der Werkzeuge 1 ein in Richtung der Rotationsachse 14 verschiebbares Zentralelement 11 aufweist, wie das z.B. bei dem in Fig. 1 und 2 gezeigten Halter mit verschiebbarem Zapfen der Fall ist. Die Verwendung des Begriffs "Zentralelement" soll nicht ausschliessen, dass das Element bezüglich der Rotationsachse 14 des Werkzeughalteradapters 16 exzentrisch angeordnet ist. Beim erfindungsgemässen Werkzeughalteradapter 16 ist keine zentrale, durchgängige Bohrung im ersten Werkzeughalter 19 erforderlich und das Verschieben des Zentralelementes 11 ist unabhängig davon möglich, ob der Werkzeughalteradapter 16 gerade montiert ist. Die Kraft zum Verschieben des Zentralelementes 11 wird von der Seite her, bevorzugt mittels einer Manschette 8 ausgeübt. Die Manschette 8 überträgt die Kraft vorzugsweise über ein Querelement 12 auf das Zentralelement 11. Das Querelement 12 verläuft durch eine Aussparung 15 im Schaft des Werkzeughalteradapters 16. Die Aussparung 15 ist dabei so gross gewählt, dass eine ausreichend grosse Bewegung des Querelementes 12 und damit auch des Zentralelementes 11 in Richtung der Rotationsachse 14 des Werkzeughalteradapters 16 möglich ist. Die Manschette wiederum kann z.B. durch Ansetzen eines nicht gezeigten Gabelwerkzeuges an den Kontaktfächen 13 verschoben werden. Das Gabelwerkzeug übt dabei eine Spreizkraft auf die Kontaktflächen 13 aus.

Eine andere, nicht gezeigte, bevorzugte Ausführung des erfindungsgemässen Werkzeughalteradapters weist weder eine Manschette 8 noch ein Querelement 12 auf. Die Kraft zum Verschieben des Zentralelementes wird mittels eines durch die seitliche Aussparung 15 geführten Werkzeuges, insbesondere mittels eines eigens dafür vorgesehenen Spezialwerkzeuges, ausgeübt.

Der erfindungsgemässe Werkzeughalteradapter 16 hat den Vorteil, dass er einen relativ geringen Platzbedarf hat. Die durch die Länge des Werkzeughalteradapters 16 veränderte Distanz zwischen Werkzeug und Werkstück kann im Allgemeinen ohne wesentliche Eingriffe an der Maschine ausgeglichen werden.

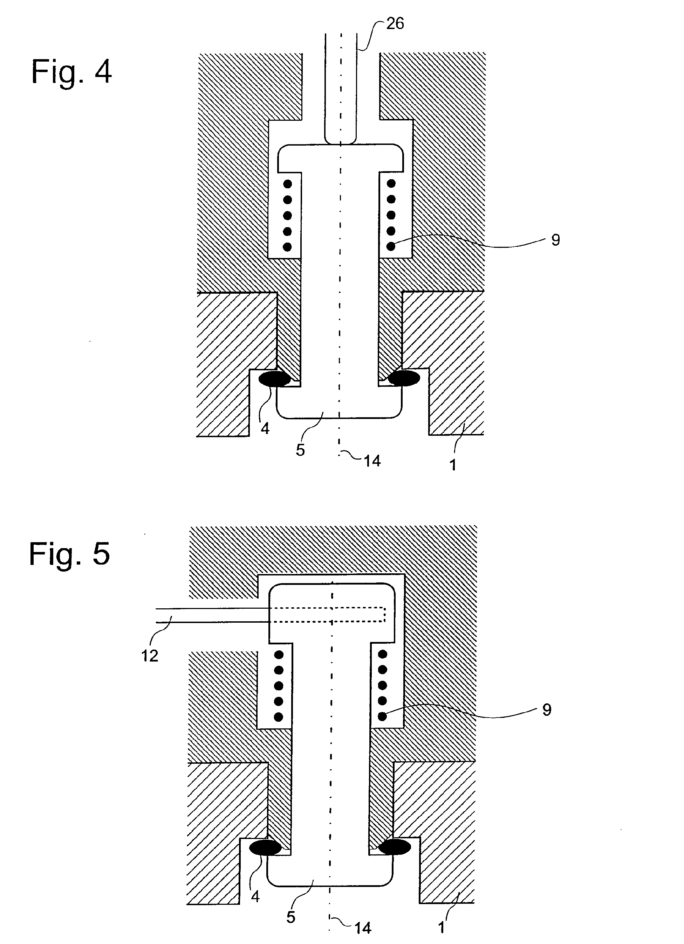

Fig. 4 zeigt eine bevorzugte Erweiterung des erfindungsgemässen Werkzeughalters aus Fig. 1 und 2. Der Zapfen 5 wird in dieser bevorzugten Ausführungsform der Erfindung über eine Druckfeder 9 in die zweite oder obere Position gedrückt. Dadurch ist ein Werkzeug 1 fixiert, solange keine andere Kraft auf den Zapfen 5 wirkt. Wird nun z.B., wie gezeigt mit einem Stössel 26 der Zapfen 5 nach unten gedrückt kann das Werkzeug 1 entnommen oder eingesetzt werden. In einer bevorzugten Ausführung ist die Druckfeder 9 so gewählt, dass sie den Zapfen 5 mit einer Spannkraft von ca. 400N nach oben drückt, bzw. zieht. Die Druckfeder 9 verläuft um den Zapfen 5 herum steht mit ihm an seinem dem Werkzeug 1 abgewandten Ende über eine Kante eines über den Radius des Zapfen 5 hervorstehenden Teils in Kraftkontakt.

Fig. 5 zeigt einen Werkzeughalter wie in Fig. 4, nur dass zum Ausüben einer Kraft auf den Zapfen 5 kein Stössel, sondern ein durch eine seitliche Aussparung im Werkzeugträger zugeführtes Querelement 12 vorgesehen ist. Diese Ausführungsform des erfindungsgemässen Werkzeughalters eignet sich besonders gut für einen Werkzeughalteradapter, weil in Rotationsachsenrichtung keine Zuführöffung für einen Stössel erforderlich ist. Eine solche Öffnung kann nämlich, falls bei der Konstruktion der Maschine nicht vorgesehen im Allgemeinen auch nicht nachgerüstet werden. Das Querelement 12 kann entweder mittels Manschette, wie in Fig. 5 gezeigt, bewegt werden, oder aber direkt von Hand bzw. mit einem Werkzeug. Zudem kann das Querelement 12 herausnehmbar und insbesondere als Spezialwerkzeug und mit einem Griff ausgestaltet sein.

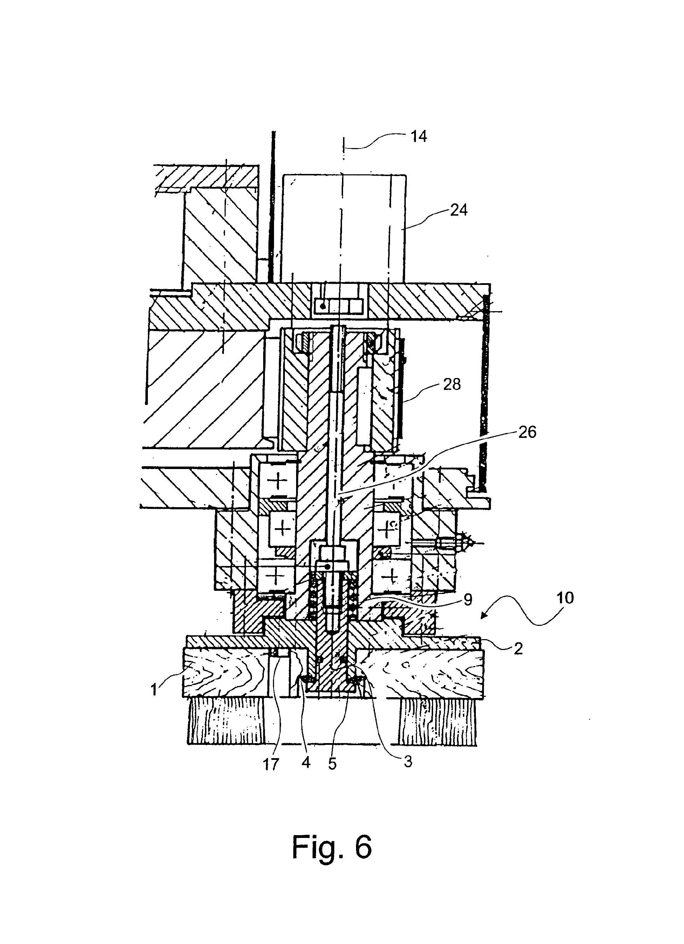

Fig. 6 zeigt eine Teilansicht einer Bürstmaschine mit einer bevorzugten Ausführungsform des erfindungsgemässen Werkzeughalter 10. Eine Tellerbürste 1 wird von einem deformierten O-Ring 4 auf Schaft 3 und Halterplatte 2 gehalten. Die Tellerbürste 1 weist eine Zentrierbohrung und eine Mitnahmebohrung auf. Die Zentrierbohrung ist auf den Schaft 3 abgestimmt. Die Mitnahmebohrung ist auf den Mitnehmer 17 abgestimmt. Der Zapfen 5 ist von der Druckfeder 9 nach oben gezogen. Durch Betätigung des Pneumatikzylinders 24 kann über den Stössel 26 eine Kraft auf den Zapfen 5 ausgeübt werden. Der Zapfen 5 kann so nach unten gedrückt werden, was die Deformation des Gummirings 4 aufhebt und ein Auswechseln der Tellerbürste 1 zulässt. Der Rotor mit dem Werkzeughalter 10 wird über einen Zahnriemen 28 angetrieben.

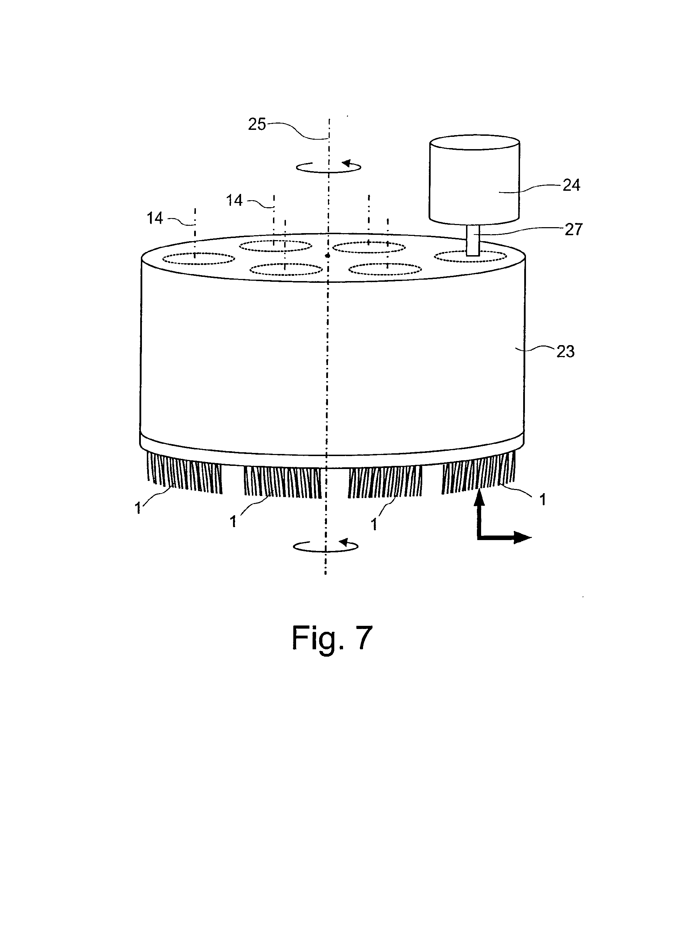

Fig. 7 zeigt in einer Seitenansicht die Planeteneinheit 23 einer bevorzugten Ausführungsform der erfindungsgemässen Bürstmaschine mit einem Pneumatikzylinder 24 zur Betätigung der erfindungsgemässen Werkzeughalter (Die Werkzeughalter selbst sind nicht zu sehen). Die Kraft des Pneumatikzylinders 24 wird über eine Pneumatikstange 27 auf den jeweiligen Werkzeughalter übertragen, insbesondere auf einen Stössel und/oder den Zapfen des Werkzeughalters. Die Werkstücke werden z.B. auf einem über einen Magnettisch geführten Förderband unter der Planeteneinheit hindurchbewegt (nicht gezeigt). Dabei werden die Werkstücke mittels der Bürsten entgratet. Die Planeteneinheit 23 weist vorzugsweise drei bis zehn Tellerbürsten 1 auf, welche im Betrieb um die Achse 25 rotieren. Zur Betätigung eines bestimmten Werkzeughalters wird die Planeteneinheit 23 so gedreht, dass sich die auszuwechselnde Tellerbürste 1 unter dem Pneumatikzylinder 24 befindet. Die Rotationsachse 14 der jeweiligen Tellerbürste 1 und die Achse des Pneumatikzylinders 24 sollten dabei im Wesentlichen übereinstimmen, wobei der Toleranzbereich z.B. durch eine Verkleinerung des Durchmessers der Pneumatikstange 27 vergrössert werden kann. In einer bevorzugten Ausführungsform garantiert eine spezielle Steuerungselektronik, dass der Pneumatikzylinder nur dann betätigt werden kann, wenn die Planeteneinheit 23 nicht angetrieben ist und daher still steht. Zudem verhindert die Steuerungselektronik ein Drehen der Planeteneinheit 23, solange der Pneumatikzylinder 24 aktiv ist, das heisst, solange die Pneumatikstange 27 in den Bereich der Planeteneinheit 23 ragt. In einer aufwendiger ausgestalteten Ausführungsform prüft die Steuerelektronik zudem, ob sich die Planeteneinheit 23 gerade in einer Wechselposition befindet, d.h. ob die Achse des Pneumatikzylinders 24 im Wesentlichen mit der Achse eines Werkzeughalters 10 übereinstimmt, und erlaubt nur in einer solchen Wechselposition die Betätigung des Pneumatikzylinders 24. Der gezeigte Aufbau mit Pneumatikzylinder 24 ermöglicht ein schnelles Auswechseln der Tellerbürsten 1 von Hand, ohne Zuhilfenahme eines Werkzeuges.

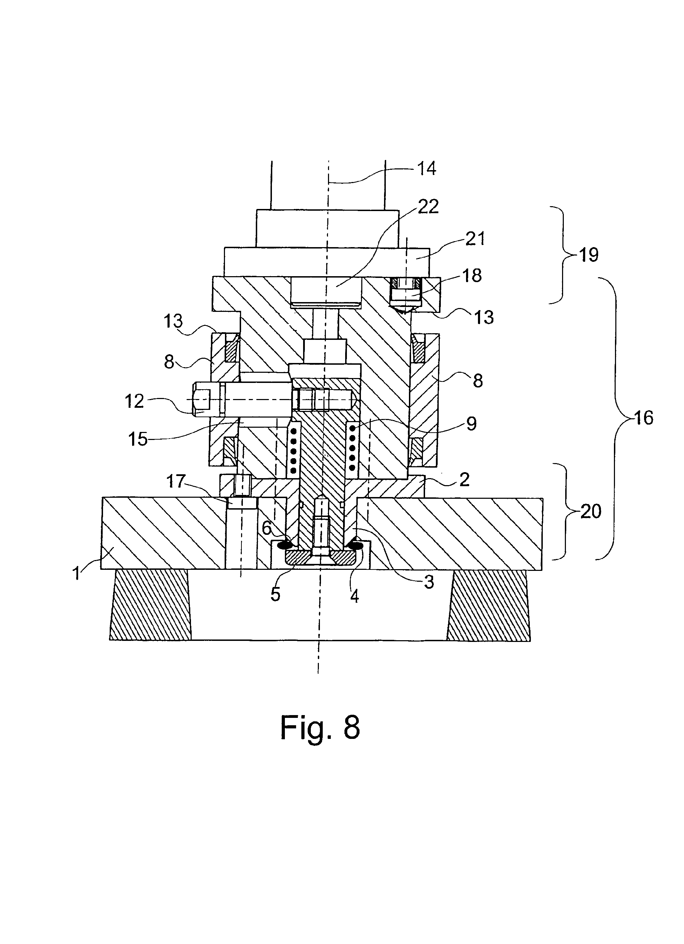

Fig. 8 zeigt einen Schnitt durch den konventionellen Werkzeughalter 19 einer Bürstmaschine mit einem darauf aufgesetzten Werkzeughalteradapter 16 und einem auf dem Werkzeughalter 20 des Werkzeughalteradapters 16 befestigten Werkzeug 1. Der gezeigte Werkzeughalteradapter 16 ist ein erfindungsgemässer Werkzeughalteradapter in einer bevorzugten Ausführungsform mit einem erfindungsgemässen Werkzeughalter 20. Der Werkzeughalteradapter 16 ist auf der Halterplatte 21 und dem Schaft 22 des konventionellen Werkzeughalter 19 befestigt. Der Mitnehmer 18 dient zur Übertragung des Drehmoments. Der Werkzeughalter 20 des Werkzeughalteradapters 16 kann über die Manschette 8 betätigt werden. Dabei wird z.B. mit einem gabelförmigen Werkzeug (nicht gezeigt) bevorzugt auf die Kontaktflächen 13 eine Spreizkraft ausgeübt, welche die Manschette 8 auf der Zylinderfläche des Werkzeughalteradapters 16 nach unten schiebt. Über das Querelement 12 wird dadurch der Zapfen 5 im Inneren des Werkzeughalteradapters 16 entgegen der Kraft der Druckfeder 9 mit verschoben. Die Deformation des O-Rings 4 wird dadurch aufgehoben und die Tellerbürste 1 kann vom Werkzeughalter 20 abgenommen und/oder eine Tellerbürste 1 kann auf den Werkzeughalter 20 aufgesetzt werden.

Mit mehreren gleichartigen Werkzeughalteradaptern ist es möglich Planeteneinheiten mit mehreren Bürstköpfen auf das Schnellwechselsystem umzurüsten. Mit einer Auswahl geeigneter Werkzeughalteradapter können so Umrüstsätze für bestimmte Maschinentypen bereitgestellt werden.

## Patentansprüche

1. Werkzeughalter (10) für mindestens ein Werkzeug (1), wobei der Werkzeughalter (10) für eine Rotation um eine Rotationsachse (14) ausgelegt ist, **dadurch gekennzeichnet, dass** der Werkzeughalter (10) mindestens ein elastisches Element (4) aufweist und mindestens ein Mittel (3, 5, 6, 7) zur Deformation desselben, wobei das elastische Element (4) in einem deformierten Zustand das Werkzeug (1) am Ablösen vom Werkzeughalter (10) hindert.

2. Werkzeughalter (10) gemäss Anspruch 1, **dadurch gekennzeichnet, dass** der Werkzeughalter (10) eine Halterplatte (2) und einen Schaft (3) aufweist, insbesondere einen Schaft (3), bei dem Form und Abmessungen auf eine Aussparung des mindestens einen Werkzeuges (1) abgestimmt sind.

3. Werkzeughalter (10) gemäss einem der vorangehenden Ansprüche, **dadurch gekennzeichnet, dass** das elastische Element (4) ein Gummiring ist, insbesondere ein O-Ring.

4. Werkzeughalter (10) gemäss einem der vorangehenden Ansprüche, **dadurch gekennzeichnet, dass** das Mittel (3, 5, 6, 7) zur Deformation des elastischen Elements (4) einen verschiebbaren Zapfen (5) umfasst.

5. Werkzeughalter (10) gemäss Anspruch 4, **dadurch gekennzeichnet, dass** der Zapfen (5) in Richtung der Rotationsachse (14) verschiebbar, insbesondere auf dieser angeordnet und insbesondere rotationsymmetrisch ist.

6. Werkzeughalter (10) gemäss einem der Ansprüche 4 oder 5, **dadurch gekennzeichnet, dass** der Zapfen (5) an einem Ende einen über den Querschnitt des Zapfens (5) hervorstehenden Teil (7) aufweist, wobei mittels dieses hervorstehenden Teils (7) das elastische Element (4) bei einer Bewegung des zylindrischen Zapfens (5) gegen eine Gegendruckfläche (6) drückbar und damit deformierbar ist.

7. Werkzeughalter (10) gemäss Ansprüchen 2 und 6, **dadurch gekennzeichnet, dass** die Gegendruckfläche (6) vom Schaft (3) gebildet ist und insbesondere eine Anschrägung des Schaftes (3) ist.

8. Werkzeughalter (10) gemäss einem der Ansprüche 4 bis 7, **dadurch gekennzeichnet, dass** der Werkzeughalter (10) eine Feder (9) aufweist, welche auf den Zapfen (5) eine Kraft ausübt, derart, dass das elastische Element (4) den deformierten Zustand einnimmt.

9. Werkzeughalter (10) gemäss Anspruch 8, **dadurch gekennzeichnet, dass** die Feder (9) eine Druckfeder ist und um den Zapfen (5) herum verläuft und mit diesem an dem dem Werkzeug (1) abgewandten Ende in Kraftkontakt steht, insbesondere entlang einer über den Querschnitt des Zapfens (5) hervorstehenden Kante.

10. Werkzeughalter (10) gemäss einem der Ansprüche 8 oder 9, **dadurch gekennzeichnet, dass** ein Stössel (26) und/oder ein Querelement (12) vorgesehen ist, mit welchem der Zapfen (5) entgegen der Kraft der Feder (9) bewegbar ist, insbesondere so, dass dadurch die Deformation des elastischen Elements (4) zum Montieren oder Demontieren eines Werkzeuges (1) aufhebbar ist.

11. Werkzeughalter (10) gemäss einem der vorangehenden Ansprüche, **dadurch gekennzeichnet, dass** mindestens ein Pneumatikzylinder (24) vorgesehen ist, welcher bei einer Aktivierung über eine Pneumatikstange (27) und insbesondere einen Stössel (26) auf den Zapfen (5) wirkt, damit die Deformation des elastischen Elements (4) aufhebt und insbesondere so eine manuelle Montage oder Demontage eines Werkzeuges (1) ohne weitere Hilfsmittel ermöglicht.

12. Werkzeughalter (10) gemäss einem der vorangehenden Ansprüche, **dadurch gekennzeichnet, dass** der Werkzeughalter (10) mindestens einen Mitnehmer (17) aufweist, insbesondere einen Mitnehmer (17), welcher bezüglich seiner Dimensionierung und Anordnung mit einer entsprechenden Aussparung des Werkzeuges (1) übereinstimmt.

13. Werkzeugwechselsystem mit mindestens einem Werkzeug (1) und mindestens einem Werkzeughalter (10) gemäss einem der Ansprüche 1 bis 12.

14. Werkzeugwechselsystem gemäss Anspruch 13, **dadurch gekennzeichnet, dass** mindestens ein Werkzeug (1) eine Bürste, insbesondere eine Tellerbürste, ist.

15. Werkzeugwechselsystem gemäss einem der Ansprüche 13 oder 14, **dadurch gekennzeichnet, dass** das mindestens eine Werkzeug (1) eine zylindrische Aussparung aufweist, welche insbesondere durchgängig ist und insbesondere eine Kante aufweist, welche dadurch gebildet ist, dass werkzeughalterseitig ein erster, kleinerer Radius und werkstückseitig ein zweiter, grösserer Radius vorgesehen ist.

16. Bürstmaschine **dadurch gekennzeichnet, dass** sie mindestens einen Werkzeughalter gemäss einem der Ansprüche 1 bis 12 aufweist.

17. Bürstmaschine gemäss Anspruch 16, **dadurch gekennzeichnet, dass** sie eine Vielzahl von Werkzeughaltern (10) aufweist, wobei diese insbesondere in einer Planeteneinheit (18) angeordnet sind und für mehrere Werkzeughalter (10) ein gemeinsamer Pneumatikzylinder (24) vorgesehen ist, wobei für einen Werkzeugwechsel bei einem bestimmten Werkzeughalter (10) dieser in eine bestimmte Wechselposition bringbar ist, insbesondere eine Wechselposition, in welcher die Achsen von Pneumatikzylinder (24) und Werkzeughalter (10) im Wesentlichen übereinstimmen.

18. Bürstmaschine gemäss Anspruch 17, **dadurch gekennzeichnet, dass** der Pneumatikzylinder (24) nur betätigbar ist, wenn die Werkzeughalter (10) nicht bewegt sind und insbesondere sich ein Werkzeughalter (10) in einer Wechselposition befindet.

19. Werkzeughalteradapter (16) mit einem Werkzeughalter (10) gemäss einem der Ansprüche 1 bis 12.

20. Werkzeughalteradapter (16) zum Aufsetzen auf einen vorhandenen ersten Werkzeughalter (19), wobei der Werkzeughalteradapter (16) seinerseits einen zweiten Werkzeughalter (20) aufweist, welcher andere Eigenschaften hat als der erste Werkzeughalter (19), und der Werkzeughalteradapter (16) für eine Rotation um eine Rotationsachse (14) ausgelegt ist, **dadurch gekennzeichnet, dass** der Werkzeughalteradapter (16) ein im Inneren des Werkzeughalteradapters (16) geführtes Zentralelement (11) aufweist, welches von ausserhalb des Werkzeughalteradapters (16) verschiebbar ist, insbesondere in Richtung der Rotationsachse (14) und insbesondere mittels eines durch eine Aussparung (15) verlaufenden Querelementes (12) oder mittels eines durch eine Aussparung (15) zuführbaren Werkzeuges.

21. Werkzeughalteradapter (16) gemäss Anspruch 20, **dadurch gekennzeichnet, dass** der Werkzeughalteradapter (16) eine Fläche und eine auf dieser verschiebbare Manschette (8) aufweist, wobei durch ein Verschieben der Manschette (8) das im Inneren des Werkzeughalteradapters (16) geführte Zentralelement (11) mitverschiebbar ist, insbesondere über ein durch eine Aussparung (15) verlaufendes Querelement (12).

22. Werkzeughalteradapter (16) gemäss einem der Ansprüche 20 oder 21, **dadurch gekennzeichnet, dass** der zweite Werkzeughalter (20) ein Werkzeughalter (10) gemäss einem der Ansprüche 1 bis 12 ist, wobei das Zentralelement (11) insbesondere dem Mittel (3, 5, 6, 7) zur Deformation des elastischen Elements (4) zuordbar ist.
